# EUROPÄISCHE PATENTANMELDUNG

(11) **EP 0 567 761 A1**
(43) Veröffentlichungstag der Anmeldung: **03.11.1993**
(21) Anmeldenummer: 93104443.2
(22) Anmeldetag: 18.03.1993
(51) Int. Cl.: B29B 13/10, B29B 17/02, B02C 7/04, B29K 21/00

(54) **Vorrichtung zum Zermahlen von Gummi**

(30) Priorität: 25.04.1992 DE 4217316
(71) Anmelder: PAUL TROESTER MASCHINENFABRIK, D-30519 Hannover (DE)
(72) Erfinder: Lozhechnikov, Yevgenity, Prof. Dr., Minsk By (RU); Schmidt, Karl Heinz, Dipl.-Ing., W-3005 Hemmingen 4 (DE); Gohlisch, Hans Joachim, Dipl.-Ing., W-3000 Hannover 81 (DE); Seidler, Ekkehard, Dipl.-Ing., W-3000 Hannover (DE)
(74) Vertreter: Junius, Walther, Dr.

(57) **Zusammenfassung**

Die Erfindung betrifft eine Vorrichtung zum Zermahlen von Gummi, bestehend aus einem Schneckenextruder und einer von diesem gespeisten Mühle mit zwei Mahlscheiben, die einen kegelförmigen Mahlspalt zwischen sich einschließen, von denen die eine mit einem zentralen Einlaß für das zu zermahlende Gut versehen ist, und von denen mindestens die eine rotierend angetrieben ist. Es ist die Aufgabe der vorliegenden Erfindung, mit einfachen Mitteln unter verringertem Energieaufwand Gummi zu einem mehlartigen Pulver zu zerreiben. Die Erfindung besteht darin, daß die Extruderschnecke und die Mahlscheiben auf der gleichen Achse angeordnet sind und daß der Ringspalt zwischen Extruderschnecke und dem Extruderzylinder sich unmittelbar in den Ringspalt zwischen den Mahlscheiben fortsetzt.

## Beschreibung

Die Erfindung betrifft eine Vorrichtung zum Zermahlen von Gummi, bestehend aus einem Schneckenextruder und einer von diesem gespeisten Mühle mit zwei Mahlscheiben, die einen kegelförmigen Mahlspalt zwischen sich einschließen, von denen die eine mit einem zentralen Einlaß für das zu zermahlende Gut versehen ist, und von denen mindestens die eine rotierend angetrieben ist.

Eine derartige Vorrichtung ist aus der DD 265 855 A1 bekannt geworden. Bei dieser bekannten Vorrichtung schließt sich an einen mit mehreren Arbeitsbereichen versehenen Extruder über ein radiales Ausgangsrohr die Mühle mit den zwei, einen kegelförmigen Mahlspalt einschließenden Mahlscheiben an. Mehrere Bearbeitungszonen sind im Extruder durch verschiedene Gestaltungen von verschiedenen Schneckenabschnitten erreicht worden. Das ist notwendig, da Gummi ein äußerst schwer zu zerkleinerndes Material ist.

Denn Gummi ist in vielerlei Hinsicht inhomogen: Durch unterschiedliche Sonnenbestrahlung und unterschiedliche Belastungen während der Lebensdauer eines Automobilreifens sowie durch unterschiedliche Lebensalter ist der zu verarbeitende Gummischrott unterschiedlich gealtert. Die Brocken des Gummischrotts weisen stark gealterte Anteile auf, welche sich relativ leicht lösen und die relativ leicht fein zu zerkleinern sind. Andere, weniger gealterte Teile hingegen weisen noch hohe Elastizitätseigenschaften auf und sind daher durch Zerreiben nicht oder nur äußerst schwierig zu zerkleinern. Da in den meisten Fällen stark gealterte Bestandteile mit wenig gealterten Bestandteilen einstückig zusammenhängen, ergeben sich besondere Schwierigkeiten bei der Bearbeitung. Diese werden noch dadurch erhöht, daß sich Fremdstoffe in Form von Metallteilen und/oder Cordfäden und/oder andere Fremdkörper und Fremdstoffe im Gummischrott befinden, die sich vor einem Mahlvorgang nicht herauslösen lassen, weil sie teils von Gummi umgeben sind, teils das Gummi an ihnen anvulkanisiert ist.

Aber auch bei der Produktion fällt Gummischrott an, wenn durch irgendwelche Produktionsfehler oder Mischungsfehler oder die Verwendung ungeeigneter Mischungen Ausschußware erzeugt wird.

Aus den genannten Gründen sieht die Vorrichtung der DD 265 855 A1 eine Trennvorrichtung für körniges Mahlgut von pulverförmigem Mahlgut vor und führt das körnige Mahlgut dem Eingangstrichter des Extruders wieder zu. So durchlaufen wenig gealterte körnige Gummiteile die Vorrichtung mehrmals. Das ist jedoch nicht der einzige Nachteil dieser Vorrichtung, Nachteile bestehen auch darin, daß die Speisung der Scheibenmühle erhebliche Schwierigkeiten bereitet, weil das in einem Strang mit vollem Querschnitt in den Eingang der Mühle eintretende Material zu einem ringförmigen Strang aufgeteilt werden muß. In der Mühle selbst bereitet das Material durch seine Elastizität und seine schmierenden Eigenschaften erhebliche Probleme, um in Pulverform überführt zu werden, was nur teilweise gelingt,der körnige Rest wird einem wiederholten Durchgang durch die Mahlvorrichtung zugeführt.

Die vorliegende Erfindung vermeidet die Nachteile des Standes der Technik. Der Erfindung liegen zwei Erkenntnisse zugrunde, die zu einem erheblich verbesserten Mahlverhalten führen:
Zum einen ist es die Erkenntnis, daß es unnötig ist, einen im Extruder ringförmigen Strang erst in einen Strang mit vollem Querschnitt zu überführen, um diesen anschließend wieder in einen ringförmigen Strang aufzuteilen, ohne daß dadurch Zerkleinerungsarbeit geleistet wird. Zum anderen ist es die Erkenntnis, daß Gummikörner, -brocken und -chips mit erheblichen plastischen Eigenschaften diese verlieren, wenn Zerkleinerungswerkzeuge mit sehr hoher Geschwindigkeit an diesen angreifen.

Es ist die Aufgabe der vorliegenden Erfindung, mit einfachen Mitteln unter verringertem Energieaufwand Gummischrott zu einem mehlartigen Pulver zu zerreiben.

Die Erfindung besteht darin, daß die Extruderschnecke und die Mahlscheiben auf der gleichen geometrischen Achse konzentrisch angeordnet sind und daß der Ringspalt zwischen Extruderschnecke und dem Extruderzylinder sich unmittelbar in den Ringspalt zwischen den Mahlscheiben fortsetzt.

Auf diese Weise wird das in einem ringförmigen Strang vom Extruder gelieferte Gummimaterial unmittelbar in den Ringstrang im Spalt zwischen den Mahlscheiben fortgesetzt. Dadurch ist ein völlig kontinuierlicher Materialübergang gewährleistet, die Mahlscheibe ist völlig gleichmäßig gefüttert und kann auf diese Weise in bestmöglicher Art arbeiten.

Hierbei ist es zweckmäßig, wenn der Endteil der Schnecke sich in oder durch die Mahlscheiben erstreckt. Die Mahlscheibe kann radial somit auf dem Endteil der Schnecke gelagert werden, wodurch sich eine niedrigere Drehzahl für das Wälzlager ergibt als in Fällen, wo die rotierende Mahlscheibe auf einem feststehenden Teil gelagert ist, wodurch aber auch z.B. bei Gegenläufigkeit höhere Differenzdrehzahlen leichter erzielbar sind
Zweckmäßig ist es, wenn die rotierende Mahlscheibe mit höherer Drehzahl als die Extruderschnecke vorzugsweise separat gleichsinnig oder gegenläufig angetrieben ist, wobei es sogar vorteilhaft ist, wenn man eine möglichst hohe Drehzahl wählt. Denn noch in sich elastischer Gummi kann mit hohen Mahlscheibendrehzahlen besser zerkleinert werden, weil die elastischen Federeigenschaften von Gummi bei hochfrequenten Belastungen erheblich geringer als bei niederfrequenten Belastungen sind.

Um Abnutzungserscheinungen an den Mahlscheiben kompensieren zu können und um den Mahlspalt auf optimale Werte einzustellen, ist es zweckmäßig, wenn Mittel zur axialen Verschiebung der einen Mahlscheibe gegenüber der anderen vorgesehen sind.

Ein Schutz für das endseitige Lager der Extruderschnecke und gleichzeitig eine Verbesserung der Materialübergabe von der Extruderschnecke in den Mahl scheibenspalt ist es, wenn die Extruderschnecke in ihrem in den Mahlscheiben befindlichen Bereich mit einem Rückfördergewinde versehen ist.

Der Übergang für das extrudierte Material in den Mahlscheibenspalt wird erleichtert, wenn der vorzugsweise kegelförmige Spalt zwischen den Mahlscheiben sich zumindest im Eingangsbereich fortschreitend verengt. Diese Gestaltung des Spaltes ist auch der fortschreitenden Zerkleinerung der Gummistücke förderlich.

Weiter ist es für den Einzug und für eine Zerkleinerung der aufzuarbeitenden Gummistücke förderlich, wenn zumindest die eine Mahlscheibe im Einzugsbereich mit Rippen versehen ist, welche auf die Gummiteile scherend und schneidend einwirken.

Eine Ausführungsform der erfindungsgemäßen Vorrichtung kann dadurch gebildet sein, daß die gemeinsame geometrische Achse von Schnecke und Mahlscheiben horizontal gelagert ist und daß ein radialer Beschickungstrichter im Schneckenextruder vorgesehen ist. Diese liegende Bauform wird überall dort bevorzugt werden,wo ein Schneckenextruder bereits vorhanden ist, an den das die beiden Mahlscheiben umschließende Mühlengehäuse angeflanscht wird.

Die Lagerung der Mahlscheiben wird jedoch durch eine andere Ausführungsform erleichtert, bei der die gemeinsame Achse von Schnecke und Mahlscheiben vertikal angeordnet ist und ein schräg angeordneter Beschickungstrichter am vertikal stehenden Extruder vorgesehen ist.

Die stehende Ausführungsform einer erfindungsgemäßen Vorrichtung kann aber auch dadurch realisiert werden, daß die gemeinsame geometrische Achse von Schnecke und Mahlscheiben in der Weise vertikal angeordnet ist, daß die Schnecke sich axial durch die Mahlscheiben erstreckt und daß sie mit ihrem Ende in den vertikal stehenden Beschickungstrichter eingreift. Hier ist der Vorteil einer erleichterten Lagerung der rotierenden Mahlscheibe mit dem Vorteil einer niedrigen Bauform gekoppelt.

Bei dieser Ausführungsform ist es weiterhin vorteilhaft, wenn die Schnecke im Bereich des Trichters Rührwerkzeuge trägt, die Brückenbildungen im Bereich des Trichters verhindern.

Die Zerkleinerungswirkung kann weiter durch die Anordnung eines Gitters möglichst mit Schnellwechselvorrichtung oder Schnellreinigungsvorrichtung von quer zur Extrusionsrichtung schmalen, aber in Extrusionsrichtung tiefen Schneiden vor dem Übergang des Extrusionsweges von der Schnecke in den Mahlscheibenspalt erhöht werden. Gleichzeitig kann dieses Gitter den Durchtritt gröberer Metallteile, welche das Mahlwerk beschädigen könnten, verhindern. Daher ist es vorteilhaft, wenn dieses Gitter auswechselbar ist und im Betrieb von Zeit zu Zeit ausgewechselt wird, um festgehaltene grobe Metallteile zu entfernen.

Das Wesen der Erfindung ist nachstehend anhand von in der Zeichnung schematisch dargestellten Ausführungsbeispielen näher erläutert. Es zeigen:

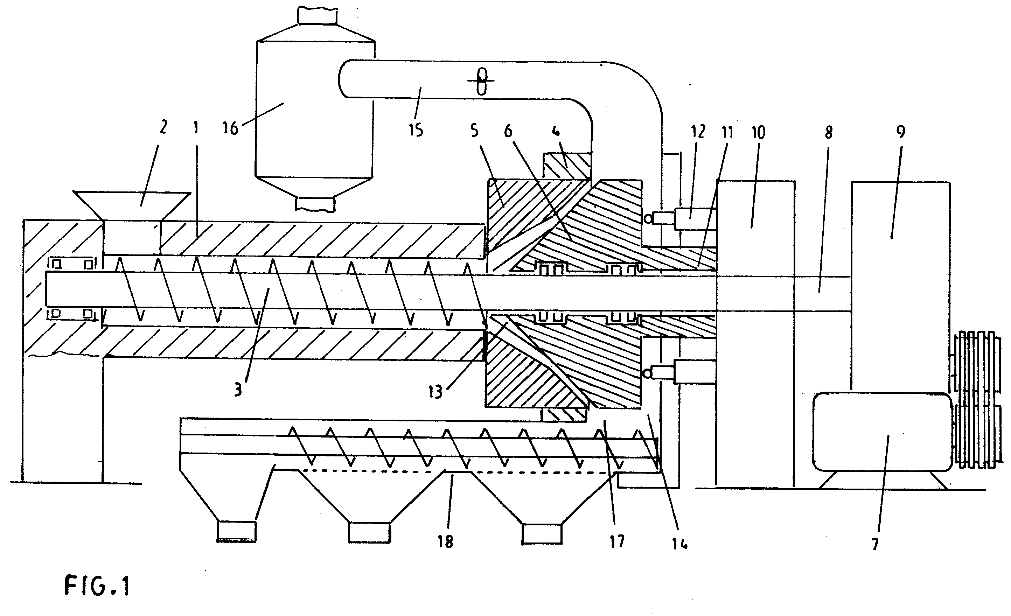

- Fig. 1: eine Vorrichtung in horizontaler Anordnung,
- Fig. 2: eine Vorrichtung in vertikaler Anordnung mit schräg angeordnetem Einzugstrichter,
- Fig. 3: eine vertikale Anordnung mit vertikal angeordnetem Einzugstrichter.

Im Extruderzylinder 1 mit dem Einzugstrichter 2 rotiert die Schnecke 3, welche aus Gründen eines verbesserten Materialeinzuges, aber auch aus Gründen einer vor Zerkleinerung des eingezogenen Materiales mit unterschiedlich gestalteten Schneckenabschnitten versehen sein kann. An den Extruderzylinder 1 schließt sich das Gehäuse 4 des Mahlwerkes an, welches die Mahlscheiben 5, 6 aufnimmt. Im gezeichneten Ausführungsbeispiel ist die Mahlscheibe 5 feststehend, sie kann in das Gehäuse 4 einsetzbar und auswechselbar sein, aber auch einstückig mit dem Gehäuse 4 hergestellt sein. Die Mahlscheibe 6 hingegen rotiert. Sie ist von der Schnecke 3 durchsetzt und auf dieser radial gelagert. Im Inneren der Zentralbohrung der Mahlscheibe 6 sind nicht nur die Lager für die Radiallagerung der Mahlscheibe 6 angeordnet, die Schnecke 3 weist in diesem Spalt auch ein nicht gezeichnetes Rückfördergewinde auf.

Zwei getrennte Antriebe haben den Vorteil, die Differenzdrehzahl unabhängig zu verstellen. Es besteht aber auch die Möglichkeit, den Antrieb sowohl der Schnecke als auch der rotierenden Mahlscheibe 6 durch ein und denselben Motor 7 erfolgen zu lassen. Dieser treibt die endseitig als Welle 8 ausgebildete Schnecke 3 direkt oder über ein Vorschaltgetriebe 9 an, dem ein Getriebe 10 nachgeschaltet ist. Dieses Getriebe 10 umfaßt die Welle 8, auf welcher im Gehäuse des Getriebes 10 ein Zahnrad angebracht ist, welches über das Getriebe 10 mit einer starken Übersetzung ins Schnelle die Hohlwelle 11 antreibt, welche mit der Mahlscheibe 6 gekoppelt ist. An der Rückseite der Mahlscheibe 6 greifen Mittel 12 zur axialen Verstellung an, mit denen sich der Spalt zwischen den Mahlscheiben 5, 6 auf gewünschte Werte einstellen läßt.

Zweckmäßigerweise sind im Einzugsbereich der Mahlscheiben 5, 6 zumindestens auf der einen Mahlscheibe Rippen 13 angeordnet.

Der Spalt zwischen den Mahlscheiben 5, 6 ist ausgangsseitig von einer Kammer 14 umgeben, durch die ein Luftstrom bewegt wird, der durch ein Rohr 15 zu einem Staubabscheider 16 führt. Durch dieses Rohr wird der Feinstaub aus der Kammer ausgetragen. Das gröbere Mahlgut fällt durch das Rohr 17 in den Sortierer 18, wo das Mahlgut nach Teilchengrößer sortiert wird.

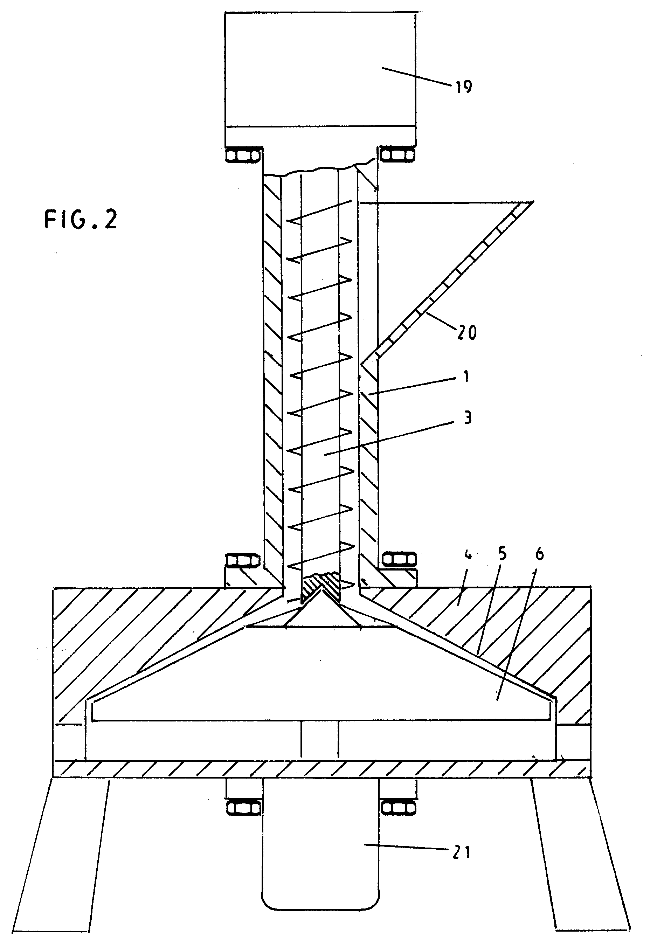

In Fig. 2 ist eine vertikale Ausführung der erfindungsgemäßen Vorrichtung dargestellt: Gleiche Teile sind hier mit gleichen Bezugszeichen versehen. Der Antrieb der Schnecke 3 erfolgt über einen kopfseitig angebrachten Getriebemotor 19 . Durch den schräg angebrachten Einzugstrichter 20 wird der Extruder mit Altgummibrocken beschickt. Die rotierende Mahlscheibe 6 wird über einen gesonderten Motor 21 angetrieben. - Es besteht aber auch die Möglichkeit, die Mahlscheibe und die Schnecke von einem gemeinsamen Motor aus anzutreiben, wobei zwischen der Schneckenwelle und der Mahlscheibenhohlwelle ein Getriebe angeordnet ist.

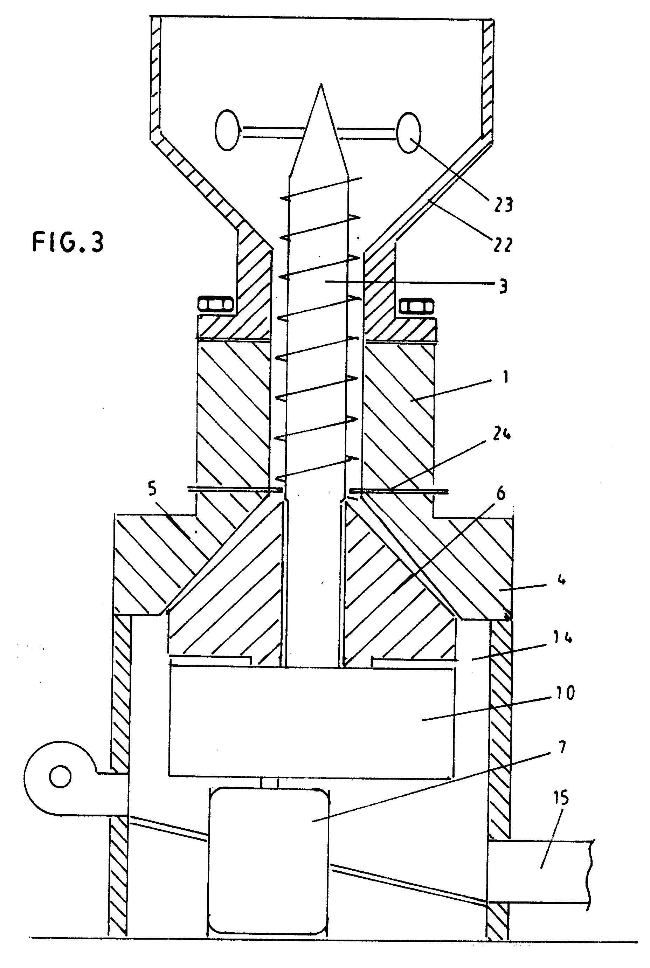

In der vertikalen Ausführungsform der Fig. 3 sind sowohl die Mahlscheibe 6 als auch die Schnecke 3 von einem gemeinsamen Motor 7 angetrieben, der unter der Vorrichtung angeordnet ist. Aus Gründen der Ersparnis an Bauraum ist das Getriebe 10 im Inneren der Kammer 14 angeordnet, in die das Mahlgut nach dem Mahlvorgang hineinfällt. Oberhalb des Gehäuses 4 der Mahlvorrichtung ist der Extruderzylinder 1 angeordnet, durch den sich die Schnecke 3 nach oben hin, den Extruderzylinder 1 durchlaufend, in den Trichter 22 erstreckt. Zur Vermeidung von Brückenbildungen im Trichter 22 sind an der Schneckenspitze Rührelemente 23 angebracht. Zum Zurückhalten von gröberen Metalleinlagen kann ein Gitter 24 vor dem Übergang des Spaltes zwischen Schnecke und Extruderzylinder in den konischen Ringspalt zwischen den Mahlscheiben vorgesehen sein.

Verschleißteile wie Büchsen im Extruderzylinder, Mahlscheiben, Rückfördergewinde, Gitter, Lager und dergleichen mehr werden zweckmäßigerweise auswechselbar konstruiert.

Extruderzylinder, Mahlscheiben und eventuell andere während des Arbeitsprozeßes heiß werdende Bauteile werden mit Kühlvorrichtungen zweckmäßigerweise ausgestattet.

### Liste der Bezugszeichen:

- 1: Extruderzylinder
- 2: Einzugstrichter
- 3: Schnecke
- 4: Gehäuse
- 5: Mahlscheibe
- 6: Mahlscheibe
- 7: Motor
- 8: Welle
- 9: Vorschaltgetriebe
- 10: Getriebe
- 11: Hohlwelle
- 12: Mittel zur axialen Verstellung
- 13: Rippe
- 14: Kammer
- 15: Rohr
- 16: Staubabscheider
- 17: Rohr
- 18: Sortierer
- 19: Getriebemotor
- 20: Einzugstrichter
- 21: Motor
- 22: Trichter
- 23: Rührelement, Zusatzförderelement
- 24: Gitter

## Patentansprüche

1. Vorrichtung zum Zermahlen von Gummi,
bestehend aus einem Schneckenextruder und einer von diesem gespeisten Mühle mit zwei Mahlscheiben, die einen kegelförmigen Mahlspalt zwischen sich einschließen,
von denen die eine mit einem zentralen Einlaß für das zu zermahlende Gut versehen ist,
und von denen mindestens die eine rotierend angetrieben ist,
dadurch gekennzeichnet,
daß die Extruderschnecke (3) und die Mahlscheiben (5, 6,) konzentrisch angeordnet sind
und daß der Ringspalt zwischen Extruderschnecke (3) und dem Extruderzylinder (1) sich unmittelbar in den Ringspalt zwischen den Mahlscheiben (5,6) fortsetzt.

2. Vorrichtung nach Anspruch 1,
dadurch gekennzeichnet,
daß der Endteil (8) der Extruderschnecke (3) sich in oder durch die Mahlscheiben (5,6) erstreckt.

3. Vorrichtung nach Anspruch 1,
dadurch gekennzeichnet,
daß die rotierende Mahlscheibe (6) mit höherer Drehzahl als die Extruderschnecke (3) vorzugsweise separat gleich- oder auch gegenläufig angetrieben ist.

4. Vorrichtung nach Anspruch 1,
dadurch gekennzeichnet,
daß Mittel (12) zur axialen Verschiebung der einen Mahlscheibe (5) gegenüber der anderen (6) vorgesehen sind.

5. Vorrichtung nach Anspruch 1 und 2,
dadurch gekennzeichnet,
daß die Extruderschnecke (3) in ihrem in den Mahlscheiben (5,6) befindlichen Bereich mit einem Rückfördergewinde versehen ist.

6. Vorrichtung nach Anspruch 1,
dadurch gekennzeichnet,
daß der vorzugsweise kegelförmige Spalt zwischen den Mahlscheiben (5,6) sich zumindest im Eingangsbereich fortschreitend verengt.

7. Vorrichtung nach Anspruch 1,
dadurch gekennzeichnet,
daß zumindest die eine der Mahlscheibe (5,6) im Einzugsbereich mit Rippen (13) versehen ist.

8. Vorrichtung nach Anspruch 1,
dadurch gekennzeichnet,
daß die gemeinsame geometrische Achse von Schnecke (3) und Mahlscheiben (5,6) horizontal angeordnet ist
und daß ein radialer Beschickungstrichter (2) vorgesehen ist.

9. Vorrichtung nach Anspruch 1,
dadurch gekennzeichnet,
daß die gemeinsame geometrische Achse von Schnecke (3) und Mahlscheiben (5,6) vertikal angeordnet ist und ein schräg angeordneter Beschickungstrichter vorgesehen ist.

10. Vorrichtung nach Anspruch 1,
dadurch gekennzeichnet,
daß die gemeinsame geometrische Achse von Schnecke (3) und Mahlscheiben (5,6) vertikal angeordnet ist,
daß die Schnecke (3) sich axial durch die Mahlscheiben (5,6) erstreckt
und daß sie mit ihrem Ende in den vertikal stehenden Beschickungstrichter (22) eingreift.

11. Vorrichtung nach Anspruch 10,
dadurch gekennzeichnet,
daß die Schnecke (3) im Bereich des Trichters (22) Rührwerkzeuge (23) trägt.

12. Vorrichtung nach Anspruch 1,
gekennzeichnet durch die Anordnung eines Gitters (24) von quer zur Extrusionsrichtung schmalen, aber in Extrusionsrichtung tiefen Schneiden vor dem Übergang des Extrusionsweges von der Schnecke (3) zwischen die Mahlscheiben (5,6).

13. Vorrichtung nach Anspruch 10,
dadurch gekennzeichnet,
daß der obere Teil des Trichters (22) gegenläufig drehbar angetrieben und innen zur zwangsweisen Fütterung der Extruderschnecke mit am Umfang befindlichen Fördergängen bzw Rippen versehen ist.
